# EUROPÄISCHE PATENTANMELDUNG

(11) **EP 0 827 982 A1**
(43) Veröffentlichungstag der Anmeldung: **11.03.1998**
(21) Anmeldenummer: 97114972.9
(22) Anmeldetag: 29.08.1997
(51) Int. Cl.: C08L 81/02, C08L 81/06, C08L 81/00, C08L 67/00, C08L 79/08, C08L 27/12, C08L 59/00

(54) **Sulfoxidgruppenhaltige Polymermischungen**

(30) Priorität: 05.09.1996 DE 19636001
(71) Anmelder: HOECHST AKTIENGESELLSCHAFT, 65929 Frankfurt am Main (DE)
(72) Erfinder: Scheckenbach, Helmut, 63225 Langen (DE)

(57) **Zusammenfassung**

Polymermischungen, erhältlich durch thermische Behandlung bei mindestens 150° C von einer Mischung, enthaltend mindestens ein Hochleistungspolymer und 15 bis 99 Gewichtsanteile, bevorzugt 40 bis 90 Gewichtsanteile und besonders bevorzugt 55 bis 75 Gewichtsanteile eines sulfoxidgruppenhaltigen Polymers, und vernetzte oder teilvernetzte Polymermischung, erhältlich durch thermische Behandlung bei mindestens 150° C von einer Mischung, enthaltend mindestens eines der Hochleistungspolymere Polyester, teilfluorierte Polymere, Polyethersulfone, Polysulfone, Polyetherimide, Polyamidimide oder Polyacetale und mindestens ein sulfoxidgruppenhaltiges Polymer, zeichnen sich durch eine hohe thermische und chemische Stabilität aus. Sulfoxidgruppenhaltige Polymere sind Polyarylensulfoxide, insbesondere Polyphenylensulfoxid. Die Polymermischungen werden zur Herstellung von Fasern, Folien oder Formteilen verwendet.

## Beschreibung

Die Erfindung betrifft Polymermischungen, die sulfoxidgruppenhaltige Polymere und Hochleistungspolymere enthalten, sowie ein Verfahren zu deren Herstellung.

Vernetzte Formmassen aus Polyarylensulfiden und Polyarylensulfoxiden sind in EP-A2-0718368 beschrieben. Duroplastische Polymermischungen werden nicht genannt.

WO 96/05252 beschreibt Mischungen von flüssigkristallinen Polymeren (LCP) oder Polyesteramiden und Polyarylensulfoxiden.

EP-A2-0710707 beschreibt geschäumte Fluorpolymere mit 1 bis 50 Gew.-% eines Polyarylensulfoxids. Eine Vernetzung wird nicht beschrieben.

Überraschend wurde gefunden, daß nur bestimmte Hochleistungspolymere wie Polyester, teilfluorierte Polymere, Polyethersulfone, Polysulfone, Polyetherimide, Polyamidimide und Polyacetale mit sulfoxidgruppenhaltigen Polymeren bei thermischer Behandlung Vernetzungen bilden.

Darüberhinaus wurde gefunden, daß bei nicht vernetzbaren Hochleistungspolymeren das sulfoxidgruppenhaltige Polymer bei thermischer Behandlung vernetzte Inseln oder, ab einem Gehalt von ungefähr 15 Gewichtsanteilen eines sulfoxidgruppenhaltigen Polymers, eine vernetzte Matrix (interpenetrierendes Netzwerk) in der Polymermischung ausbildet.

Die Erfindung betrifft somit Polymermischungen, erhältlich durch thermische Behandlung bei mindestens 150° C von einer Mischung, enthaltend 1 bis 85 Gewichtsprozent mindestens eines Hochleistungspolymers und 15 bis 99 Gewichtsprozent eines sulfoxidgruppenhaltigen Polymers, wobei die Gewichtsprozente auf den Gesamtpolymergehalt der Polymermischung bezogen sind. Die Polymermischungen enthalten bevorzugt 40 bis 90 Gewichtsprozent sulfoxidgruppenhaltiges Polymer und 10 bis 60 Gewichtsprozent Hochleistungspolymer, besonders bevorzugt 55 bis 75 Gewichtsprozent sulfoxidgruppenhaltiges Polymer und 25 bis 45 Gewichtsprozent Hochleistungspolymer.

Ein weiterer Gegenstand der Erfindung betrifft vernetzte oder teilvernetzte Polymermischungen, erhältlich durch thermische Behandlung bei mindestens 150° C von einer Mischung, enthaltend mindestens eines der Hochleistungspolymere Polyester, teilfluorierte Polymere, Polyethersulfone, Polysulfone, Polyetherimide, Polyamidimide oder Polyacetale und mindestens ein sulfoxidgruppenhaltiges Polymer. Die vernetzten oder teilvernetzten Polymermischungen enthalten 1 bis 99 Gewichtsprozent sulfoxidgruppenhaltiges Polymer und 1 bis 99 Gewichtsprozent Hochleistungspolymer, wobei die Gewichtsprozente auf den Gesamtpolymergehalt der Polymermischung bezogen sind und in der Summe 100 Gewichtsprozent ergeben. Die Polymermischungen enthalten bevorzugt 1 bis 70 Gewichtsprozent sulfoxidgruppenhaltiges Polymer und 30 bis 99 Gewichtsprozent Hochleistungspolymer und besonders bevorzugt 1 bis 50 Gewichtsprozent sulfoxidgruppenhaltiges Polymer und 50 bis 99 Gewichtsprozent Hochleistungspolymer.

Die Erfindung betrifft ferner ein Verfahren zur Herstellung von Polymermischungen, wobei eine Mischung von mindestens einem Hochleistungspolymer und mindestens einem sulfoxidgruppenhaltigen Polymer, bevorzugt Polyarylensulfoxid und besonders bevorzugt Polyphenylensulfoxid, auf Temperaturen im Bereich von 150 bis 400° C, vorzugsweise auf eine Temperatur im Bereich von 280° C bis 380 ° C, erhitzt wird.

Unter sulfoxidgruppenhaltigem Polymer werden Polymere oder Oligomere verstanden, die wenigstens eine Arylensulfoxid - Einheit (-Ar-SO-; Ar = Arylen) enthalten. Den Arylenen liegen beispielsweise ein- oder mehrkernige Aromaten, die ein- oder mehrfach substituiert sein können, zugrunde. Beispiele sind Phenylen, Biphenylen (-C₆H₄-C₆H₄-), Naphthalen, Anthracen oder Phenanthren. Substituenten sind z. B. geradkettige, cyclische oder verzweigte C₁ - C₂₀ - Kohlenwasserstoffreste, wie C₁ - C₁₀ - Alkylreste, z. B. Methyl, Ethyl, n-Propyl, iso-Propyl, n-Butyl, t-Butyl, n-Hexyl oder C₆ - C₁₄ - Arylreste, z. B. Phenyl oder Naphthyl, Halogene, Sulfonsäure-, Amino-, Nitro-, Cyano-, Hydroxy-, Alkyloxy oder Carboxylgruppen.

Bevorzugte sulfoxidgruppenhaltige Polymere sind Polyarylensulfidsulfoxide und Polyarylensulfoxide, insbesondere Polyphenylensulfidsulfoxid und Polyphenylensulfoxid, die z. B. leicht durch teilweise oder vollständige Oxidation der Schwefelgruppen von Polyarylensulfiden mit Ozon, Salpetersäure oder NO₂/N₂O₄ hergestellt werden können. In der Regel werden Polyphenylensulfoxide mit einem Sulfoxid-Anteil (bezogen auf alle Schwefel enthaltenden Brücken im Polymer) von mindestens 10 % verwendet. Je nach gewünschtem Eigenschaftsprofil der Polymermischungen wird ein höherer Sulfoxidgruppen-Anteil eingesetzt. Das eingesetzte sulfoxidgruppenhaltige Polymer weist einen Sulfoxidgruppenanteil, bezogen auf alle enthaltenen Schwefelatome, von mindestens 10 %, bevorzugt mindestens 40 %, besonders bevorzugt mindestens 65 % und ganz besonders bevorzugt mindestens 95 %, auf. Polyarylensulfidsulfoxide werden im folgenden auch als Polyarylensulfoxide verstanden und werden von dem Begriff Polyarylensulfoxide miterfaßt. Die Polyarylensulfoxide können auch Anteile an Sulfongruppen enthalten. Die Herstellung der Sulfoxidgruppen enthaltenden Polymere ist zum Beispiel in den deutschen Patentanmeldungen DE 4314735, DE 4314736, DE 4440010 und DE 19531163 beschrieben, worauf Bezug genommen wird.

Die sulfoxidgruppenhaltigen Polymere wie Polyarylensulfoxid, insbesondere Polyphenylensulfoxid, verändern sich bei thermischer Behandlung ab etwa 150° C. Ab einer Temperatur von etwa 280° C ist die Veränderung deutlich erkennbar. Nach derzeitigem Kenntnisstand wird im allgemeinen Schwefeldioxid (SO₂) abgespalten und chemische Reaktionen wie Vernetzungen treten ein.

Unter Hochleistungspolymeren werden Kunststoffe verstanden, die einen Schmelzpunkt von oberhalb von 100°C, insbesondere oberhalb von 200° C, aufweisen. Diese werden beispielsweise beschrieben in Ullmann's Encyclopedia of Industrial Chemistry, 5. Auflage, VCH Verlagsgesellschaft mbH, Weinheim-New York 1992: organische Fluorpolymere, Volume A11, S. 393-430; Polyamide, Volume A21, S. 179-206; Polycarbonate, Volume A21, S.207-216; Polyester, Volume A21, S. 227-252; Polyimide, Volume A21, S. 253-273; Polymerblends, Volume A21, S. 274-305; Hochtemperaturbeständige Polymere, Volume A21, S. 449-472; Polymethylmethacrylate, Volume A21, S. 473-486; Polyphenylenoxide, Volume A21, S. 605-614; Polyurethane, Volume A21, S. 665-716 und Silikone, Volume A24, S.57-95; Polyoxymethylene, Volume A21, S. 591-603, worauf jeweils Bezug genommen wird.

Hochleistungspolymere werden beispielsweise auch in "G.W. Becker, D. Braun: Kunststoff - Handbuch Bd. 3/3, Carl Hanser Verlag, München 1994" beschrieben, worauf Bezug genommen wird (Polyacrylate: S. 1-53; Polysulfone: S. 141-217; Flüssigkristalline Polyester: S. 219-258; Polyimide: S. 263-293; Polyetherimide: S. 297-335; Polyamidimide: S. 337-356; Poly(aryletherketone): S. 359-385).

Polysulfone sind ferner beschrieben in 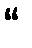 Encyclopedia of polymer science and engineering, Volume 13, Wiley, New York 1988, Seite 196-211, Stichwort 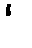 Polysulfones 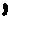 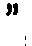 , worauf Bezug genommen wird.

Die Hochleistungspolymere Cycloolefin Copolymer (COC) werden beschrieben in 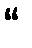 H. Cherdron, M. Brekner und F. Osan, Die Angewandte Makromolekulare Chemie (223), 121, (1994) 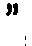 , worauf Bezug genommen wird.

Besonders bevorzugte Hochleistungspolymere sind Polyester, teilfluorierte Polymere, Polyethersulfone, Polysulfone, Polyetherimide, Polyamidimide oder Polyacetale. Teilfluorierte Polymere sind thermoplastische Fluorpolymere, die vernetzbare Gruppen enthalten, wie Wasserstoff-Kohlenstoff-Bindungen (H-C), Chlor-Kohlenstoff-Bindungen (Cl-C), Brom-Kohlenstoff-Bindungen (Br-C), Iod-Kohlenstoff-Bindungen (I-C), ungesättigte Bindungen (z.B. C-C-Doppelbindungen, aromatische Strukturen) enthalten. PFA (Perfluoralkoxy) wird als vollfluoriertes Polymer angesehen, da nur Fluor-Kohlenstoff-Anteile enthalten sind, die über eine Etherbrücke verbunden sind. Teilfluorierte Polymere sind beispielsweise ETFE (Tetrafluorethylen/Ethylen-Copolymer) und THV (Terpolymer aus Tetrafluorethylen, Hexafluorpropylen und Vinylidenfluorid).

Die Polymermischung, die mindestens ein Hochleistungspolymer und mindestens ein sulfoxidgruppenhaltiges Polymer enthält, führt nicht bei jedem Hochleistungspolymer zu einer Vernetzung. Welche Hochleistungspolymere mittels eines sulfoxidgruppenhaltigen Polymers vernetzt werden können, kann nicht vorausgesagt werden und muß in jedem Fall experimentell ermittelt werden. Die Vernetzung der Hochleistungspolymere führt zu einer Erhöhung der Schmelzviskosität. Vernetzte Polymermischungen werden beispielsweise von Polyestern, teilfluorierten Polymeren, Polyethersulfonen, Polysulfonen, Polyetherimiden oder Polyamidimiden gebildet. Nach derzeitiger Kenntnis tritt bei Polymermischungen mit PFA (Perfluoralkoxy) oder Polyarylenetherketonen keine Vernetzung ein. Jedoch kann unabhängig von der Vernetzbarkeit der Hochleistungspolymere bei einem Gehalt der Polymermischung von mehr als 15 Gewichtsprozent (bezogen auf den Gesamt-Polymergehalt der Polymermischung) von Polyarylensulfoxid (Sulfoxid-Anteil beispielsweise über 95 %), wobei Gewichtsprozente im Bereich von 40 bis 90 %, insbesondere 55 bis 75 %, bevorzugt werden, das Polyarylensulfoxid in der Polymermischung ein interpenetrierendes Netzwerk aus vernetztem Polyarylensulfid oder bei geringeren Gewichtsanteilen von Polyarylensulfoxid (beispielsweise weniger als 15 Gewichtsprozent) Inseln von vernetztem Polyarylensulfid in der Polymermischung ausbilden.

Polymermischungen mit einem bei der Herstellung eingesetzten Gewichtsanteil von mehr als 40 Gewichtsprozent sulfoxidgruppenhaltigen Polymers verhalten sich wie Duroplaste. Ab etwa 55 Gewichtsprozent sulfoxidgruppenhaltigen Polymers wird ein Vernetzungsgrad erreicht, der für Anwendungen für thermisch und chemisch beanspruchte Teile vorteilhaft ist.

Der Vernetzungsgrad in der Polymermischung hängt von verschiedenen Parametern ab wie von der Art des sulfoxidgruppenhaltigen Polymers, insbesondere von der Menge der Sulfoxidgruppen und von dem Anteil des sulfoxidgruppenhaltigen Polymers in der Polymermischung. Außerdem hängt der Vernetzungsgrad von der Schmelzeviskosität des Hochleistungspolymers und von der Verarbeitungstemperatur ab. Der Vernetzungsgrad ist somit steuerbar und kann beliebig variiert werden.

Gemäß der Erfindung können als Hochleistungspolymer auch Mischungen oder Blends verschiedener Hochleistungspolymere und als sulfoxidgruppenhaltiges Polymer auch Mischungen verschiedener sulfoxidgruppenhaltiger Polymere eingesetzt werden.

Die Polymermischungen gemäß der Erfindung können übliche Additive enthalten, wie thermische Stabilisatoren, UV-Stabilisatoren, Antistatika, Flammschutzmittel, Farbstoffe, Pigmente, anorganische und/oder organische Füllmittel (Pulver, Fasern u.s.w.) oder Gleitmittelzusätze wie Molybdändisulfid, Graphit oder Polytetrafluorethylen.

Zur Herstellung der Polymermischung sollte das sulfoxidgruppenhaltige Polymer möglichst fein und gleichmäßig in der Mischung verteilt sein. Dies wird beispielsweise durch Verwendung feiner Pulver erreicht. Im allgemeinen liegen die mittleren Korngrößen des Pulvers im Bereich von um 0,3 bis 500 µm, vorzugsweise von 5 bis 300 µm, besonders bevorzugt von 5 bis 100 µm. Es besteht auch die Möglichkeit, eine gute Vermischung durch eine thermische Verarbeitung, z.B. mit handelsüblichen Knetern oder Extrudern, vorzugsweise Zweiwellenextrudern, bei Temperaturen, bei denen das Hochleistungspolymer aufschmilzt, zu erreichen.

Das mittlere Molekulargewicht der Sulfoxidgruppen enthaltenden Polymere, ausgedrückt als Gewichtsmittel M_{W} (bestimmt durch GPC), liegt im allgemeinen zwischen 4000 und 200000 g/mol, bevorzugt zwischen 10 000 und 150 000 g/mol, besonders bevorzugt zwischen 25 000 und 100 000 g/mol.

Die Polymermischungen gemäß der Erfindung werden im allgemeinen aus den Einzelkomponenten in hierfür geeigneten Mischern hergestellt.

Bei dem Verfahren gemäß der Erfindung wird die Polymermischung nach bekannten Verfahren (z.B. Spritzguß, Heißpressen, Extrusion, Blasformen) in dafür geeigneten Apparaturen bei Temperaturen von 150° C bis 400° C, vorzugsweise 280 bis 380° C zu Formkörpern oder Formteilen verarbeitet, wobei die Vernetzung stattfindet.

Polymermischungen gemäß der Erfindung können bei der thermischen Behandlung zu einem blasenhaltigen oder aufgeschäumten Produkt führen. Um ein blasenfreies Produkt zu gewinnen, kann beispielsweise folgendermaßen verfahren werden:
a) Hochleistungspolymer und sulfoxidgruppenhaltiges Polymer werden im Extruder bei Temperaturen oberhalb von 150° C, vorteilhaft etwa 300 bis 360° C (bei Verwendung von Polyphenylensulfoxid mit Sulfoxidgruppenanteil um 100%), miteinander verschmolzen. Das hierbei gebildete Produkt enthält im allgemeinen Blasen oder ist geschäumt je nach Sulfoxid-Anteil. Blasen werden durch weitere thermische Behandlung beseitigt.
b) Hochleistungspolymer und sulfoxidgruppenhaltiges Polymer können auch im Extruder bei Temperaturen unterhalb von etwa 300° C (bei Verwendung von Polyphenylensulfoxid mit Sulfoxidgruppenanteil um 100%) ohne Schaum- oder Blasenbildung miteinander verschmolzen werden, wobei der erzielte Vernetzungsgrad kleiner ist als bei einer thermischen Behandlung oberhalb von 300° C.

Thermoplastisch verarbeitbare Polymermischungen mit vernetzbaren Hochleistungspolymeren verfügen über eine höhere Viskosität der Schmelze als die reinen Hochleistungspolymere. Eine Erhöhung des Wertes der Schmelzviskosität ist beispielsweise bei Hochleistungspolymeren mit zu geringer Molmasse erwünscht, um die thermoplastische Verarbeitbarkeit zu verbessern. Mit Zunahme der Vernetzung wächst die chemische Beständigkeit der Polymermischung. Die thermoplastischen Polymermischungen werden daher zur Herstellung von Formteilen wie Fasern, Folien und Formkörpern verwendet. Die vernetzte Polymermischung weist ein größeres Verhältnis von Speichermodul zu Verlustmodul gegenüber den reinen Hochleistungspolymeren auf. Beispielsweise ist das Verhältnis bei der Polymermischung größer als 10 % gegenüber dem Wert bei dem 10 % größer als der Wert bei dem Hochleistungspolymer.

Duroplastische Polymermischungen eignen sich aufgrund des hohen Vernetzungsgrades besonders zur Verwendung für die Herstellung von Formteilen mit hoher Lösemittelbeständigkeit. Außerdem finden die duroplastischen Polymermischungen Anwendung zur Herstellung von Formteilen mit hoher Formbeständigkeit bei thermischer Belastung. Aus duroplastischen Polymermischungen lassen sich Formkörper mit höherer Härte und Steifigkeit herstellen.

### Beispiele

In den Beispielen 2 bis 8 wird Polyphenylensulfoxid (PPSO) eingesetzt, das nach Beispiel 1 hergestellt wurde.

### 1. Herstellung von Polyphenylensulfoxid (PPSO):

1250 ml 86%iger Salpetersäure werden bei Raumtemperatur in einem Vierhalskolben mit Rührer vorgelegt. Anschließend werden 200 g Polyphenylensulfid (Fortron 0205 B4/20µm, Hoechst AG, Frankfurt am Main, Deutschland) über einen Zeitraum von 40 min zugegeben, wobei das Polyphenylensulfid in Lösung geht. Durch die Reaktionswärme erhöht sich hierbei die Temperatur des Reaktionsgemischs auf ca. 40°C und wird mittels externer Kühlung auf dieser Temperatur gehalten. Nach Ende der Zugabe von Polyphenylensulfid wird noch 90 min bei 40°C nachgerührt. Zur Ausfällung des Produkts wird die Lösung unter ständigem Rühren mit 6 l entsalztem Wasser vermischt. Das Produkt wird abfiltriert, getrocknet und gemahlen (mittlere Korngröße d₅₀-Wert: ca. 20 µm). ESCA-Analyse des Produkts ergibt, daß ca. 98% der Schwefelgruppen des eingesetzten Polyphenylensulfids zu Sulfoxidgruppen umgewandelt worden sind (Polyphenylensulfoxid mit Sulfoxid-Anteil um 98%). Die Dichte das Polyphenylensulfoxids (PPSO) beträgt ca. 1,40 g/cm³.

### 2. Polyester

Als Polyester wurde ein Polybutylenterephthalat PBT mit einem MVI (250/2) von 34 cm³/10min verwendet.

PBT wurde mit 0,10 und 20 Gew.-% PPSO auf einem Kneter (Rheocord System 40, Haake Buchler, Saddle Brook, NJ, USA) 10 min lang unter Schutzgasatmosphäre vermischt. Die Knettemperatur betrug 280°C. Anschließend wurde an den Mischungen sowie dem ungekneteten reinen PBT die Viskosität, der Speicher- und Verlustmodul mittels time-sweep (60 Minuten bei ω = 10 rad/s) und frequency-sweep (von ω = 10⁻¹ bis 10³ rad/s) gemessen. Die Viskositätsmessungen wurden bei 280°C durchgeführt.

Die Viskositätsmessungen ergaben mit steigenden PPSO-Anteilen eine Zunahme der Viskosität gegenüber dem gekneteten PBT ohne PPSO-Zusatz. Der Speichermodul erhöhte sich gegenüber dem Verlustmodul mit steigendem PPSO-Anteil. Dies deutet auf eine Vernetzungsreaktion von PBT mit PPSO hin.

| Frequenz-sweep | Viskosität [Pa*s] bei 10 rad/s | Speichermodul (SM) [Pa] bei 10 rad/s | Verlustmodul (VM) [Pa] bei 10 rad/s | SM/VM |
|---|---|---|---|---|
| 100% PBT | 13,1 | 1,02 | 131 | 0,008 |
| 90 % PBT | 35,8 | 10,7 | 358 | 0,03 |
| 10 % PPSO | | | | |
| 80% PBT | 54,4 | 319 | 441 | 0,7 |
| 20% PPSO | | | | |
| %-Angaben sind Gewichtsprozent | | | | |

Der Gewichtsverlust (bestimmt mittels isothermer TGA über 12 h in Luft bei 320°C) der Mischung mit 20 Gew.-% PPSO verringerte sich gegenüber der mit 0% PPSO von 21,1% auf 16,8%.

Der Torsionsmodul (bestimmt mittels RDA2, der Rheometric Scientific, Bensheim, Deutschland, Meßbereich -50°C bis 200°C, Meßatmosphäre: Luft) der Mischung mit 20 Gew.-% PPSO war über dem gesamten Meßbereich höher als der des reinen PBT.

### 3. Fluorpolymere

### a) Perfluoralkoxy (PFA)

Als PFA wurde Hostaflon PFA 6515 N der Hoechst AG, Frankfurt am Main, Deutschland verwendet. Produkteigenschaffen sind im Datenblatt 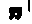 Hostaflon 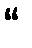 der Hoechst AG dokumentiert.

PFA wurde mit 0,10 und 20 Gew.-% PPSO auf einem Kneter (Rheocord System 40, Haake Buchler, Saddle Brook, NJ, USA) 10 min lang unter Schutzgasatmosphäre vermischt. Die Knettemperatur betrug 320°C. Anschließend wurde an den Mischungen sowie dem ungekneteten reinen PFA die Viskosität, der Speicher- und Verlustmodul mittels time-sweep (60 Minuten bei ω = 10 rad/s) und frequency-sweep (von ω = 10⁻¹ bis 10³ rad/s) gemessen. Die Viskositätsmessungen wurden bei 320°C durchgeführt.

Die Viskositätsmessungen ergaben bis zu 10 Gew.-% PPSO-Zusatz eine Abnahme der Viskosität. Bei 20 Gew.-% PPSO stieg die Viskosität wieder leicht an, erreichte jedoch nicht die Viskosität des reinen PFA. Der Speichermodul veränderte sich gegenüber dem Verlustmodul kaum. Vernetzungsreaktionen von PFA mit PPSO finden somit nicht statt. Speziell bei hohen PPSO-Anteilen kann es jedoch zu einer Vernetzung zwischen den einzelnen PPSO-Molekülen kommen, die dann ein (interpenetrierendes) Netzwerk aus vernetztem PPS ausbilden.

| Frequenz-sweep | Viskosität [Pa*s] bei 10 rad/s | Speichermodul (SM) [Pa] bei 10 rad/s | Verlustmodul (WM) [Pa] bei 10 rad/s | SM/VM |
|---|---|---|---|---|
| 100% PFA | 3640 | 10800 | 34800 | 0,31 |
| 90% PFA | 1570 | 4280 | 15100 | 0,28 |
| 10% PPSO | | | | |
| 80% PFA | 2670 | 8400 | 25400 | 0,33 |
| 20% PPSO | | | | |
| %-Angaben sind Gewichtsprozent | | | | |

Der Gewichtsverlust (bestimmt mittels isothermer TGA über 12 h in Luft bei 320°C) der Mischung mit 20 Gew.-% PPSO erhöhte sich gegenüber der mit 0% PPSO von 0,8% auf 4,4%.

Der Torsionsmodul (bestimmt mittels RDA2, der Rheometric Scientific, Bensheim, Deutschland, Meßbereich -150°C bis 300°C, Meßatmosphäre: Luft) der Mischung mit 20 Gew.-% PPSO lag unterhalb von 130°C (Tg von PFA) höher und oberhalb von 130°C niedriger als das reine PFA. Der Tg bei ca. 130°C der Mischung mit 20 Gew.-% PPSO war stärker ausgeprägt und erstreckte sich über einen breiteren Temperaturbereich als das reine PFA. Dies deutet auf eine reduzierte Kristallinität der Mischung mit 20 Gew.-% PPSO hin.

### b) Terpolymer aus Tetrafluorethylen, Hexafluorpropylen und Vinylidenfluorid (THV)

Als THV wurde das Produkt THV 200 P der Firma 3M, Neuss, Bundesrepublik Deutschland, verwendet. Produkteigenschaften sind im Datenblatt 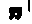 THV Fluorthermoplast 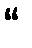 von 3M dokumentiert.

THV wurde mit 0,10 und 20 Gew.-% PPSO auf einem Kneter (Rheocord System 40, Haake Buchler, Saddle Brook, NJ, USA) 20 min bei 320°C unter Schutzgasatmosphäre vermischt. Anschließend wurde an den Mischungen sowie dem ungekneteten reinen THV die Viskosität, der Speicher- und Verlustmodul mittels time-sweep (60 Minuten bei ω = 10 rad/s) und frequency-sweep (von ω = 10⁻¹ bis 10³ rad/s) gemessen. Die Viskositätsmessungen wurden bei 280°C durchgeführt.

Die Viskositätsmessungen ergaben mit steigenden PPSO-Anteilen eine Zunahme der Viskosität gegenüber dem gekneteten THV ohne PPSO-Zusatz. Der Speichermodul erhöhte sich gegenüber dem Verlustmodul mit steigendem PPSO-Anteil. Dies deutet auf eine Vernetzungsreaktion von THV mit PPSO hin.

| Frequenz-sweep | Viskosität [Pa*s] bei 10 rad/s | Speichermodul (SM) [Pa] bei 10 rad/s | Verlustmodul (VM) [Pa] bei 10 rad/s | SM/VM |
|---|---|---|---|---|
| 100% THV | 1160 | 2030 | 11400 | 0,18 |
| 90% THV | 1850 | 3880 | 18100 | 0,21 |
| 10% PPSO | | | | |
| 80% THV | 3110 | 8140 | 30000 | 0,27 |
| 20% PPSO | | | | |
| %-Angaben sind Gewichtsprozent | | | | |

Der Gewichtsverlust (bestimmt mittels isothermer TGA über 12 h in Luft bei 300°C) der Mischung mit 20 Gew.-% PPSO verringerte sich gegenüber der mit 0% PPSO von 20,6% auf 0,9%.

Der Torsionsmodul (bestimmt mittels RDA2, der Rheometric Scientific, Bensheim, Deutschland, Meßbereich -150°C bis 120°C, Meßatmosphäre: Luft) der Mischung mit 20 Gew.-% PPSO war über den gesamten Meßbereich höher als der des reinen THV.

### c) Tetrafluorethylen/Ethylen-Copolymer (ETFE)

Als ETFE wurde Hostaflon ET 6210J der Hoechst AG, Frankfurt am Main, Deutschland verwendet. Produkteigenschaften sind im Datenblatt 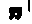 Hostaflon 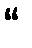 der Hoechst AG dokumentiert.

ETFE wurde mit 0, 10 und 20 Gew.-% PPSO auf einem Kneter (Rheocord System 40, Haake Buchler, Saddle Brook, NJ, USA) 20 min bei 320°C unter Schutzgasatmosphäre vermischt. Anschließend wurde an den Mischungen sowie dem ungekneteten reinen ETFE die Viskosität, der Speicher- und Verlustmodul mittels time-sweep (60 Minuten bei ω = 10 rad/s) und frequency-sweep (von ω = 10⁻¹ bis 10³ rad/s) gemessen. Die Viskositätsmessungen wurden bei 320°C durchgeführt.

Die Viskositätsmessungen ergaben mit steigenden PPSO-Anteilen eine Zunahme der Viskosität gegenüber dem gekneteten ETFE ohne PPSO-Zusatz. Der Speichermodul erhöhte sich gegenüber dem Verlustmodul mit steigendem PPSO-Anteil. Dies deutet auf eine Vernetzungsreaktion von ETFE mit PPSO hin.

| Frequenz-sweep | Viskosität [Pa*s] bei 10 rad/s | Speichermodul (SM) [Pa] bei 10 rad/s | Verlustmodul (VM) [Pa] bei 10 rad/s | SM/VM |
|---|---|---|---|---|
| 100% ETFE | 676 | 1910 | 6490 | 0,29 |
| 90% ETFE | 1170 | 3910 | 11000 | 0,36 |
| 10% PPSO | | | | |
| 80% ETFE | 1650 | 6070 | 15400 | 0,39 |
| 20% PPSO | | | | |
| %-Angaben sind Gewichtsprozent | | | | |

Der Gewichtsverlust (bestimmt mittels isothermer TGA über 12 h in Luft bei 320°C) der Mischung mit 20 Gew.-% PPSO verringerte sich gegenüber der mit 0% PPSO von 52,4% auf 2,5%.

Der Torsionsmodul (bestimmt mittels RDA2, der Rheometric Scientific, Bensheim, Deutschland, Meßbereich -50°C bis 200°C, Meßatmosphäre: Luft) der Mischung mit 20 Gew.-% PPSO war über dem gesamten Meßbereich höher als der des reinen ETFE.

### 4. Polyethersulfon (PES)

Als PES wurde Radel A-200 der Amoco, Düsseldorf, Deutschland verwendet. Produkteigenschaften sind im Datenblatt 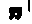 Amoco Performance Products 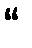 der Amoco dokumentiert. PES wurde mit 0, 10 und 20 Gew.-% PPSO auf einem Kneter (Rheocord System 40, Haake Buchler, Saddle Brook, NJ, USA) 20 min bei 360°C unter Schutzgasatmosphäre vermischt. Anschließend wurde an den Mischungen sowie dem ungekneteten reinen PES die Viskosität, der Speicher- und Verlustmodul mittels time-sweep (60 Minuten bei ω = 10 rad/s) und frequency-sweep (von ω = 10⁻¹ bis 10³ rad/s) gemessen. Die Viskositätsmessungen wurden bei 360°C durchgeführt.

Die Viskositätsmessungen ergaben mit steigenden PPSO-Anteilen eine Zunahme der Viskosität gegenüber dem gekneteten PES ohne PPSO-Zusatz. Der Speichermodul erhöhte sich gegenüber dem Verlustmodul mit steigendem PPSO-Anteil. Dies deutet auf eine Vernetzungsreaktion von PES mit PPSO hin.

| Frequenz-sweep | Viskosität [Pa*s] bei 10 rad/s | Speichermodul (SM) [Pa] bei 10 rad/s | Verlustmodul (VM) [Pa] bei 10 rad/s | SM/VM |
|---|---|---|---|---|
| 100% PES | 1520 | 3620 | 14800 | 0,24 |
| 90% PES | 2190 | 8520 | 20100 | 0,42 |
| 10% PPSO | | | | |
| 80% PES | 3740 | 22800 | 29600 | 0,77 |
| 20% PPSO | | | | |
| %-Angaben sind Gewichtsprozent | | | | |

Der Gewichtsverlust (bestimmt mittels isothermer TGA über 12 h in Luft bei 360°C) der Mischung mit 20 Gew.-% PPSO erhöhte sich gegenüber der mit 0% PPSO von 2,2% auf 4,0%.

Der Torsionsmodul (bestimmt mittels RDA2, der Rheometric Scientific, Bensheim, Deutschland, Meßbereich -50°C bis 250°C, Meßatmosphäre: Luft) der Mischung mit 20 Gew.-% PPSO war mit der des reinen PES bis ca. 200°C vergleichbar. Der Tg der Mischung mit 20 Gew.-% PPSO lag jedoch um ca.10°C niedriger. Dies deutet auf eine (partielle) Mischbarkeit hin.

### 5. Polyaryletherketon (PAEK)

Als PAEK wurde PEEK 450G der Victrex GmbH, Hofheim, Deutschland verwendet. Produkteigenschaften sind im Datenblatt 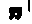 Victrex PEEK 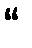 der ICI Materials, Middlesbrough, England dokumentiert.

PAEK wurde mit 0, 10 und 20 Gew.-% PPSO auf einem Kneter (Rheocord System 40, Haake Buchler, Saddle Brook, NJ, USA) 20 min bei 360°C unter Schutzgasatmosphäre vermischt. Anschließend wurde an den Mischungen sowie dem ungekneteten reinen PAEK die Viskosität, der Speicher- und Verlustmodul mittels time-sweep (60 Minuten bei ω = 10 rad/s) und frequency-sweep (von ω = 10⁻¹ bis 10³ rad/s) gemessen. Die Viskositätsmessungen wurden bei 360°C durchgeführt.

Die Viskositätsmessungen ergaben mit steigenden PPSO-Anteilen eine Abnahme der Viskosität gegenüber dem gekneteten PAEK ohne PPSO-Zusatz. Der Speichermodul reduzierte sich gegenüber dem Verlustmodul mit steigendem PPSO-Anteil. Vernetzungsreaktionen von PAEK mit PPSO finden somit nicht statt. Speziell bei hohen PPSO-Anteilen kann es jedoch zu einer Vernetzung zwischen den einzelnen PPSO-Molekülen kommen, die dann ein (interpenetrierendes) Netzwerk aus vernetztem PPS ausbilden.

| Frequenz-sweep | Viskosität [Pa*s] bei 10 rad/s | Speichermodul (SM) [Pa] bei 10 rad/s | Verlustmodul (VM) [Pa] bei 10 rad/s | SM/VM |
|---|---|---|---|---|
| 100% PAEK | 3890 | 24200 | 30400 | 0,80 |
| 90% PAEK | 1010 | 4270 | 9190 | 0,46 |
| 10% PPSO | | | | |
| 80% PAEK | 537 | 1710 | 5090 | 0,34 |
| 20% PPSO | | | | |
| %-Angaben sind Gewichtsprozent | | | | |

Der Gewichtsverlust (bestimmt mittels isothermer TGA über 12 h in Luft bei 360°C) der Mischung mit 20 Gew.-% PPSO erhöhte sich gegenüber der mit 0% PPSO von 1,4% auf 4,8%.

Der Torsionsmodul (bestimmt mittels RDA2, der Rheometric Scientific, Bensheim, Deutschland, Meßbereich -50°C bis 350°C, Meßatmosphäre: Luft) der Mischung mit 20 Gew.-% PPSO war unterhalb des Tg (ca. 160°C) mit der des reinen PAEK vergleichbar. Der Tg der Mischung mit 20 Gew.-% PPSO erstreckte sich jedoch über einen längeren Temperaturbereich als der des reinen PAEK. Bei Temperaturen oberhalb des Tg war der Torsionsmodul der Mischung mit 20 Gew.-% PPSO höher als der des reinen PAEK

### 6. Polyetherimid (PEI)

Als PEI wurde Ultem 1010 der General Electric Plastics, Rüsselsheim, Deutschland verwendet. Produkteigenschaften sind im Datenblatt 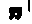 Ultem 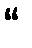 der General Electric Plastics dokumentiert.

PEI wurde mit 0 und 20 Gew.-% PPSO auf einem Kneter (Rheocord System 40, Haake Buchler, Saddle Brook, NJ, USA) 20 min bei 360°C unter Schutzgasatmosphäre vermischt.

Anschließend wurden beide Produkte in Reagenzgläser gegeben und mittels eines Heizblocks langsam aufgeheizt und dabei ihr Zustandsverhalten beobachtet.

| Temperatur | 100% PEI | 80% PEI 20% PPSO |
|---|---|---|
| 260°C | weich-zäh | weich-zäh |
| 275°C | weich-zäh | weich-zäh |
| 300°C | Schmelze | weich-zäh |
| 400°C | Schmelze | weich-zäh |
| 410°C | Schmelze | weich-zäh |
| 460°C | Schmelze | weich-zäh |
| %-Angaben sind Gewichtsprozent | | |

Da die Mischung mit 20 Gew.-% PPSO nicht aufschmilzt, deutet dies auf eine Vernetzungsreaktion von PEI mit PPSO hin.

Zusätzlich wurden von beiden Produkten DSC-Messungen gemacht (Meßbereich: 30°C bis 380°C, Aufheizrate: 20 K/min, Atmosphäre: Stickstoff). Hierbei zeigte die Mischung mit 20 Gew.-% PPSO einen um ca. 20°C erniedrigten Tg. Dies deutet auf eine (partielle) Mischbarkeit von PEI und PPSO hin.

Der Gewichtsverlust (bestimmt mittels isothermer TGA über 12 h in Luft bei 360°C) der Mischung mit 20 Gew.-% PPSO erhöhte sich gegenüber der mit 0% PPSO von 1,3% auf 5,2%.

### 7. Polysulfon (PSU)

Als PSU wurde Ultrason S2010 der BASF AG, Ludwigshafen, Deutschland verwendet. Produkteigenschaften sind im Datenblatt 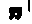 Ultrason S/E 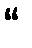 der BASF dokumentiert.

PSU wurde mit 0 und 20 Gew.-% PPSO auf einem Kneter (Rheocord System 40, Haake Buchler, Saddle Brook, NJ, USA) 20 min bei 360°C unter Schutzgasatmosphäre vermischt.

Anschließend wurden beide Produkte in Reagenzgläser gegeben und mittels eines Heizblocks langsam aufgeheizt und dabei ihr Zustandsverhalten beobachtet.

| Temperatur | 100% PSU | 80% PSU 20% PPSO |
|---|---|---|
| 260°C | Schmelze | weich-zäh |
| 275°C | Schmelze | weich-zäh |
| 300°C | Schmelze | weich-zäh |
| 400°C | Schmelze | fest-zäh |
| 410°C | Schmelze | fest-zäh |
| 460°C | Schmelze | fest-zäh |
| %-Angaben sind Gewichtsprozent | | |

Da die Mischung mit 20 Gew.-% PPSO nicht aufschmilzt, deutet dies auf eine Vernetzungsreaktion von PSU mit PPSO hin.

Zusätzlich wurden von beiden Produkten DSC-Messungen gemacht (Meßbereich: 30°C bis 380°C, Aufheizrate: 20 K/min, Atmosphäre: Stickstoff). Hierbei zeigte die

Mischung mit 20 Gew.-% PPSO einen um ca. 25°C erniedrigten Tg. Dies deutet auf eine (partielle) Mischbarkeit von PSU und PPSO hin.

Der Gewichtsverlust (bestimmt mittels isothermer TGA über 12 h in Luft bei 360°C) der Mischung mit 20 Gew.-% PPSO erhöhte sich gegenüber der mit 0% PPSO von 3,8% auf 7,8%.

### 8. Polyamidimid (PAI)

Als PAI wurde Torlon 4203L der Amoco, Düsseldorf, Deutschland verwendet. Produkteigenschaften sind im Datenblatt 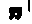 Amoco Performance Products 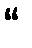 der Amoco dokumentiert.

PAI wurde mit 0 und 20 Gew.-% PPSO auf einem Kneter (Rheocord System 40, Haake Buchler, Saddle Brook, NJ, USA) 5 min bei 340°C unter Schutztgasatmosphäre vermischt. Anschließend wurden beide Produkte in Reagenzgläser gegeben und mittels eines Heizblocks langsam aufgeheizt und dabei ihr Zustandsverhalten beobachtet.

| Temperatur | 100% PAI | 80% PAI / 20% PPSO |
|---|---|---|
| 260°C | weich-zäh | hart-zäh |
| 275°C | weich-zäh | hart-zäh |
| 300°C | weich-zäh | hart |
| 400°C | hart-zäh | hart |
| 410°C | hart-zäh | hart |
| 460°C | hart-zäh | hart |
| %-Angaben sind Gewichtsprozent | | |

Da die Mischung mit 20 Gew.-% PPSO eine geringere Verformbarkeit aufweist, deutet dies auf eine Vernetzungsreaktion von PAI mit PPSO hin.

Der Gewichtsverlust (bestimmt mittels isothermer TGA über 12 h in Luft bei 340°C) der Mischung mit 20 Gew.-% PPSO erhöhte sich gegenüber der mit 0% PPSO von 3,2% auf 3,6%.

## Patentansprüche

1. Polymermischung, erhältlich durch thermische Behandlung bei mindestens 150° C von einer Mischung, enthaltend 1 bis 85 Gewichtsprozent mindestens eines Hochleistungspolymers und 15 bis 99 Gewichtsprozent eines sulfoxidgruppenhaltigen Polymers, wobei die Gewichtsprozente auf den Gesamtpolymergehalt der Polymermischung bezogen sind und in der Summe 100 Gewichtsprozent ergeben.

2. Vernetzte oder teilvernetzte Polymermischung, erhältlich durch thermische Behandlung bei mindestens 150° C von einer Mischung, enthaltend mindestens eines der Hochleistungspolymere Polyester, teilfluorierte Polymere, Polyethersulfone, Polysulfone, Polyetherimide, Polyamidimide oder Polyacetale und mindestens ein sulfoxidgruppenhaltiges Polymer.

3. Polymermischung nach Anspruch 1, enthaltend 10 bis 60 Gewichtsprozent mindestens eines Hochleistungspolymers und 40 bis 90 Gewichtsprozent eines sulfoxidgruppenhaltigen Polymers.

4. Polymermischung nach Anspruch 1, enthaltend 25 bis 45 Gewichtsprozent mindestens eines Hochleistungspolymers und 55 bis 75 Gewichtsprozent eines sulfoxidgruppenhaltigen Polymers.

5. Polymermischung nach Anspruch 1 oder 2, dadurch gekennzeichnet, daß als sulfoxidgruppenhaltiges Polymer Polyarylensulfoxid verwendet wird.

6. Polymermischung nach Anspruch 1 oder 2, dadurch gekennzeichnet, daß als sulfoxidgruppenhaltiges Polymer Polyphenylensulfoxid verwendet wird.

7. Polymermischung nach Anspruch 1 oder 2, dadurch gekennzeichnet, daß das eingesetzte sulfoxidgruppenhaltige Polymer einen Sulfoxidgruppenanteil, bezogen auf alle enthaltenen Schwefelatome, von mindestens 10 % aufweist.

8. Polymermischung nach Anspruch 1 oder 2, dadurch gekennzeichnet, daß das eingesetzte sulfoxidgruppenhaltige Polymer einen Sulfoxidgruppenanteil, bezogen auf alle enthaltenen Schwefelatome, von mindestens 65 % aufweist.

9. Polymermischung nach Anspruch 2, dadurch gekennzeichnet, daß 1 bis 99 Gewichtsprozent von sulfoxidgruppenhaltigem Polymer und 1 bis 99 Gewichtsprozent des Hochleistungspolymers enthalten sind, wobei die Gewichtsprozente auf den Gesamtpolymergehalt der Polymermischung bezogen sind und die Summe der Gewichtsanteile von sulfoxidgruppenhaltigem Polymer und Hochleistungspolymer 100 Gewichtsprozent ergeben.

10. Polymermischung nach Anspruch 2, dadurch gekennzeichnet, daß das Verhältnis von Speichermodul zu Verlustmodul der Polymermischung um mehr als 10 Prozent gegenüber dem Wert des reinen Hochleistungspolymeren, das auch in der Polymermischung enthalten ist, erhöht ist.

11. Verfahren zur Herstellung von Polymermischungen gemäß Anspruch 1 oder 2, wobei eine Mischung von mindestens einem Hochleistungspolymer und mindestens von einem sulfoxidgruppenhaltigen Polymer im Bereich von 150 bis 400° C erhitzt wird.

12. Verfahren nach Anspruch 11, dadurch gekennzeichnet, daß als Hochleistungspolymere Polyester, teilfluorierte Polymere, Polyethersulfone, Polysulfone, Polyetherimide, Polyamidimide oder Polyacetale verwendet werden.

13. Verfahren nach Anspruch 11, dadurch gekennzeichnet, daß als sulfoxidgruppenhaltigen Polymer Polyarylensulfoxid oder Polyphenylensulfoxid verwendet werden.

14. Verwendung der Polymermischung gemäß Anspruch 1 oder 2 zur Herstellung von Fasern, Folien oder Formteilen.
